# EUROPEAN PATENT SPECIFICATION

(11) **EP 2 407 516 B1**
(45) Date of publication and mention of the grant of the patent: **02.09.2015**
(21) Application number: 11173855.5
(22) Date of filing: 13.07.2011
(51) Int. Cl.: C08L 83/04, C09D 183/04, C09J 183/04

(54) **Hybrid siloxane polymer, encapsulant obtained from the siloxane polymer, and electronic device including the encapsulant**
Hybrides Siloxanpolymer, mit dem Siloxanpolymer hergestellter Verkapselungsstoff und elektronische Vorrichtung mit dem Verkapselungsstoff
Polymère de siloxane hybride, agent d'encapsulation obtenu par le polymère de siloxane et dispositif électronique incluant l'agent d'encapsulation

(30) Priority: 14.07.2010 KR 20100068143
(43) Date of publication of application: 18.01.2012
(73) Proprietor: CHEIL INDUSTRIES INC., Kumi-city, Kyungsangbuk-do 730-030 (KR)
(72) Inventor: Kim, Woo-Han, Gyeonggi-do (KR); Shin, June-Ho, Gyeonggi-do (KR); Koh, Sang-Ran, Gyeonggi-do (KR); Cha, Sung-Hwan, Gyeonggi-do (KR); Ahn, Hyun-Jung, Gyeonggi-do (KR)
(74) Representative: Michalski Hüttermann & Partner Patentanwälte mbB

(56) References cited:
- US-A1- 2006 275 617
- US-A1- 2009 281 243

## Description

### BACKGROUND OF THE INVENTION

### (a) Field of the Invention

This disclosure relates to a hybrid siloxane polymer, an encapsulant obtained from the hybrid siloxane polymer, and an electronic device including the encapsulant.

### (b) Description of the Related Art

A light emitting element such as a light emitting diode (LED), an organic light emitting device (OLED), a photoluminescent (PL) device, and the like has been variously applied to a domestic electric device, a lighting device, a display device, various automatic devices, and the like.

The light emitting element may display intrinsic colors of a light emitting material such as blue, red, and green using a light emitter, or white by combining light emitters displaying different colors.

This light emitting element may generally have a packaging or encapsulation structure.

This packaging or encapsulation structure may be made of an encapsulant including a transparent resin being able to externally pass light emitted from a light emitting element. This encapsulant is located where light passes. Accordingly, it should necessarily have heat and light resistance. Recently, a siloxane resin has been researched instead of an epoxy-based encapsulant having relatively weak heat and light resistance.

However, the siloxane resin may be broken or have poor interface adherence due to a high coefficient of thermal expansion after the curing, and also may have deteriorated workability due to high surface tackiness.

US 2009/281243 discloses a composition comprising one branched and one linear polyorganosiloxane, both with alkenyl groups, a polyorganohydrogensiloxane and a platinum catalyst, which cures to form an LED sealing material.

US 2006/275617 discloses a composition comprising one straight-chain and one 3D polyorganosiloxane, both with alkenyl groups, a polyorganohydrogensiloxane and a platinum catalyst, which cures to form an LED sealing material.

### SUMMARY OF THE INVENTION

One aspect of the present invention provides a hybrid siloxane polymer that increases crack resistance to secure stability of a light emitting element and decrease tackiness to improve its workability as well as maintaining high heat resistance and light resistance.

Another aspect of the present invention provides an encapsulant acquired from the hybrid siloxane polymer.

Yet another aspect of the present invention provides an electronic device including the encapsulant.

According to one aspect of the present invention, a hybrid siloxane polymer is provided that includes a first siloxane resin having a linear structure and including moieties represented by the following Chemical Formulas 1 a and 1b and double bonds at both terminal ends, a curing agent having more than two silicon-hydrogen bonds, and a second siloxane resin having a reticular structure and comprising at least one alkenyl group:

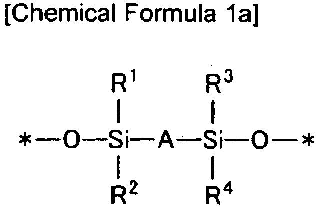

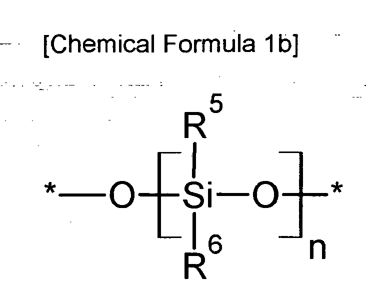

In Chemical Formula 1 a or 1 b, A is a C2 to C10 alkylene group, R¹ to R⁶ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, and n ranges from 1 to 500.

The second siloxane resin may be represented by the following Chemical Formula 2.

[Chemical Formula 2] [R⁷SiO_{3/2}]_{T}[R⁸R⁹SiO]_{D}[R¹⁰R¹¹R¹²SiO_{1/2}]_{M}

In Chemical Formula 2, R⁷ to R¹² are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, provided that at least one of R¹⁰, R¹¹, and R¹² is an alkenyl group, T>0, D≥0, M>0, and T+D+M=1.

At least 15% of R⁷ to R¹² in Chemical Formula 2 may include an aryl group.

At least 30% of R⁵ and R⁶ in Chemical Formula 1b may include an aryl group.

The first siloxane resin may further include a moiety represented by the following Chemical Formula 1c.

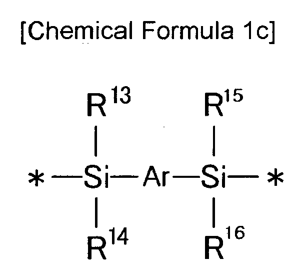

In Chemical Formula 1c, Ar is a substituted or unsubstituted C6 to C20 aryl group, R¹³ to R¹⁶ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof.

The A of the first siloxane resin may be selected from ethylene, propylene, butylene, and pentylene.

The first siloxane resin may have a number average molecular weight ranging from about 500 to about 20000.

The first and second siloxane resins may be respectively included in an amount of about 5 to 50 wt% and about 15 to 80 wt% based on the entire amount of the hybrid siloxane polymer.

The hybrid siloxane polymer includes a curing agent having more than two silicon-hydrogen bonds.

The hybrid siloxane polymer may further include a hydrosilation catalyst.

According to another aspect of the present invention, an encapsulant prepared by curing the aforementioned hybrid siloxane polymer is provided.

According to yet another aspect of the present invention, an electronic device including the encapsulant is provided.

The electronic device may include a light emitting diode, an organic light emitting device, a photoluminescent device, and a solar cell.

### DETAILED DESCRIPTION

Exemplary embodiments of the present invention will hereinafter be described in detail. However, these embodiments are only exemplary and do not limit the present invention. As those skilled in the art would realize, the described embodiments may be modified in various different ways, all without departing from the scope of the present invention.

As used herein, when a definition is not otherwise provided, the term "substituted" refers to one substituted with at least a substituent selected from the group consisting of a halogen (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, an alkyl group, a C2 to C16 alkenyl group, a C2 to C16 alkynyl group, a C6 to C30 aryl group, a C7 to C13 arylalkyl group, a C1 to C4 oxyalkyl group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a heterocycloalkyl group, and a combination thereof, instead of hydrogen of a compound.

As used herein, when a definition is not otherwise provided, the term "hetero" refers to one including 1 to 3 heteroatoms selected from N, O, S, and P.

Hereinafter, a hybrid siloxane polymer according to one embodiment is described.

The hybrid siloxane polymer according to one embodiment includes a first siloxane resin having a linear structure and a second siloxane resin having a reticular structure.

The first siloxane resin includes moieties represented by the following Chemical Formulae 1 a and 1 b.

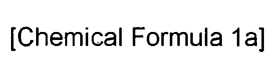

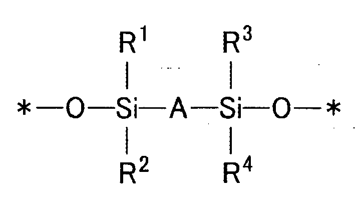

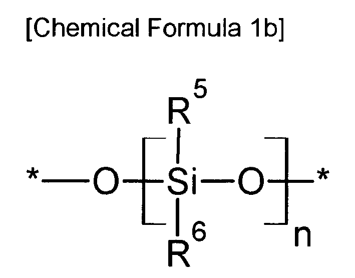

In Chemical Formulae 1 a or 1b, A is a C2 to C10 alkylene group, R¹ to R⁶ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, and n ranges from 1 to 500.

The moiety represented by the above Chemical Formula 1a structurally includes a linear bridge hydrocarbon (A) linking two silicon atoms therebetween. This structure may remarkably decrease surface tackiness during the process. Accordingly, the siloxane resin may maintain a low coefficient of thermal expansion (CTE) and a low modulus, and thus increase crack resistance and interface adherences.

In one embodiment, the linear bridge hydrocarbon (A) may preferably include a C2 to C5 alkylene group, for example, an ethylene group, a propylene group, a butylene group, and a pentylene group, and in particular, a C2 or C3 alkylene group, for example, an ethylene group or a propylene group.

The moiety represented by the above Chemical Formula 1b may be a siloxane moiety with a silicon-oxygen-silicon bond.

The moiety represented by the above Chemical Formula 1 b may include a substituent combined with silicon, that is, R⁵ and R⁶ may include at least 30% of an aryl group. When the moiety includes an aryl group within the range, it may bring about a high refractive index.

In the above Chemical Formula 1 b, n does not indicate a polymerization degree but the number of the R⁵R⁶SiO- in a moiety represented by formula 1 b, when the moieties represented by the following Chemical Formulas 1 a and 1 b are included more than one.

The first siloxane resin includes carbon-carbon double bonds being capable of performing a hydrosilation reaction at both terminal ends. Herein, as expressed in the following Chemical Formula a, the carbon-carbon double bonds are directly linked to silicon.

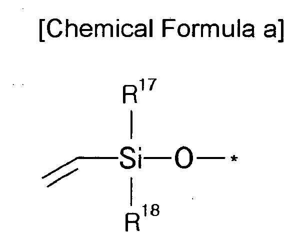

In Chemical Formula a, R¹⁷ and R¹⁸ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof.

In this way, the first siloxane resin has a linear structure with carbon-carbon double bonds at the terminal ends, and thus may perform a hydrosilation reaction at a level equivalent to a second siloxane resin having a reticular structure.

If the first siloxane resin having a linear structure has a sharply reduced hydrosilation reaction compared with a second siloxane resin having a three-dimensional reticular structure, the second siloxane resin having a three-dimensional reticular structure is cured first, forming a region with a low coefficient of thermal expansion and high modulus. Then, the first siloxane resin having a linear structure is cured, resulting in bad crack resistance and interface adherence of a final product. According to the embodiment of the present invention, the first siloxane resin having a linear structure has an equivalent hydrosilation reaction to a second siloxane resin having a three-dimensional reticular structure, preventing deterioration of crack resistance and interface adherence.

The first siloxane resin may have a number average molecular weight ranging from about 500 to 20,000.

The first siloxane resin may be included in an amount of about 5 to 50 wt% based on the entire amount of a hybrid siloxane polymer. When the first siloxane resin is included within the range, it may maintain hardness of a hybrid siloxane polymer after the curing and maintain its modulus within an appropriate range, improving crack resistance.

The first siloxane resin may be prepared, for example, according to three methods.

First, the first siloxane resin is prepared by hydrosilylating a siloxane compound having two carbon-carbon double bonds with a siloxane compound having two silicon-hydrogen bonds.

For example, a siloxane resin represented by the following Chemical Formula e is prepared by hydrosilylating a siloxane compound having two silicon-hydrogen bonds and represented by the following Chemical Formula b with a siloxane compound having two carbon-carbon double bonds and represented by the following Chemical Formula c or d.

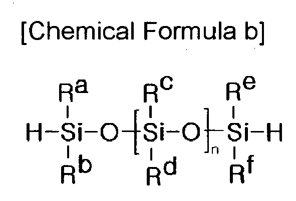

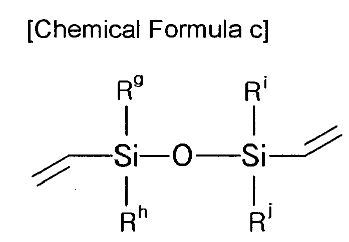

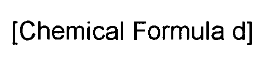

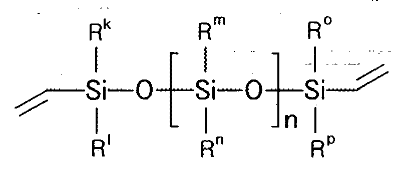

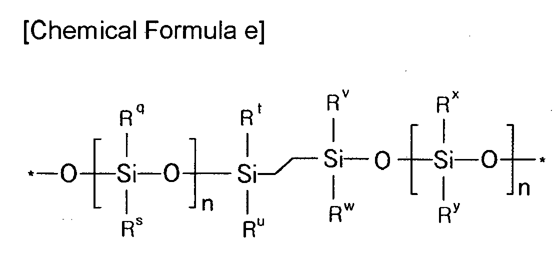

In Chemical Formulae b to e, Ra to Ry are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, and n ranges from 1 to 500.

On the other hand, a compound including an aryl group linked between following silicon and silicon may be used instead of a part of a siloxane compound having two silicon-hydrogen bonds.

The compound including an aryl group between silicon-silicon may be a compound represented by the following Chemical Formula f or g.

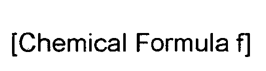

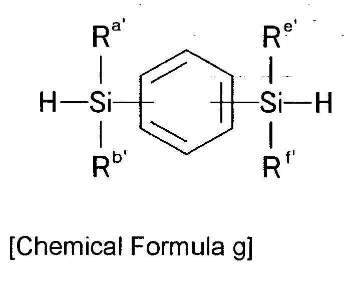

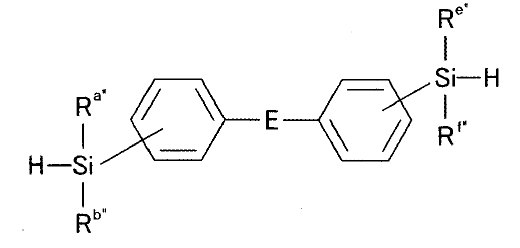

In Chemical Formulae f and g, E is a single bond, oxygen, a sulfonyl group, a C1 to C10 alkylene group, a hexafluoropropylene group, or a combination thereof, Ra', Rb', Re', Rf', Ra", Rb", Re", and Rf" are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof.

Herein, the first siloxane resin may further include a moiety represented by the following Chemical Formula 1 c.

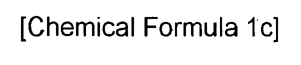

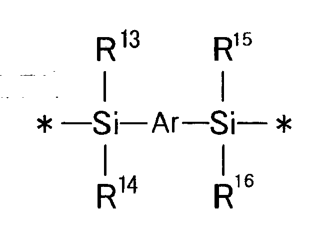

In Chemical Formula 1c, Ar is a substituted or unsubstituted C6 to C20 aryl group, and R¹³ to R¹⁶ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof.

Secondly, the first siloxane resin is prepared by first hydrosilylating a siloxane compound having two carbon-carbon double bonds with a silane compound and then cohydrolyzing the resulting product with a dichloroalkylsilane or dichloroarylsilane compound.

Third, the first siloxane resin is prepared by cohydrolyzing the compound including an alkylene group between two silicon atoms with a silane compound.

The second siloxane resin may be a compound represented by the following Chemical Formula 2.

[Chemical Formula 2] [R⁷SiO_{3/2}]_{T} [R⁸R⁹SiO]_{D} [R¹⁰R¹¹R¹²SiO_{1/2}]_{M}

In Chemical Formula 2, R⁷ to R¹² are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, provided that at least one of R¹⁰, R¹¹, and R¹² is an alkenyl group, T>0, D≥0, M>0, and T+D+M=1.

In the above Chemical Formula 2, at least 15% of R⁷ to R¹² may include an aryl group.

The second siloxane resin plays a role of determining its hardness when a hybrid siloxane polymer is cured.

The second siloxane resin may be included in an amount of about 15 to 80wt% based on the entire amount of a hybrid siloxane polymer. When the second siloxane resin is included within the range, hardness of a hybrid siloxane polymer after the curing may be appropriately maintained.

The hybrid siloxane polymer may further include a curing agent. The curing agent may be a compound including two silicon-hydrogen bonds at the terminal end.

The silicon-hydrogen bond of a curing agent may be included in a ratio of about 0.5 to 2.0 mols based on 1 mol of a double bond included in the first and second siloxane resins. When the silicon-hydrogen bond is included within the range, it may secure a sufficient curing degree of a hybrid siloxane polymer during the curing, and simultaneously prevent oxidation or discoloring of the cured product due to non-reacted hydrogen-silicon bonds.

The curing agent may be included in an amount of about 15 to 40 wt% based on the entire amount of the hybrid siloxane polymer. When the curing agent is included within the range, it may maintain hardness of a hybrid siloxane polymer after the curing.

The hybrid siloxane polymer may further include a hydrosilation catalyst other than the aforementioned first and second siloxane resins.

The hydrosilation catalyst may be a catalyst including, for example, platinum, rhodium, palladium, ruthenium, iridium, osmium, or a combination thereof as a central metal. For example, it may a Karstedt catalyst prepared through reaction of chloroplatinic acid and 1,3-divinyl-1,1,3,3-tetramethoxysiloxane. The hydrosilation catalyst may be included in an amount of about 0.1 ppm to 1000ppm based on the total amount of the hybrid siloxane polymer.

The aforementioned hybrid siloxane polymer is cured, and thus may be used as an encapsulant for an electronic device. Herein, the electronic device may include, for example, a light emitting diode, an organic light emitting device, a photoluminescent device, and a solar cell but is not limited thereto.

The encapsulant prepared from the hybrid siloxane polymer has heat and light resistance, and thus decreases a coefficient of thermal expansion as well as secures high transmittance and a high refractive index, improving crack resistance and adherence. In addition, it may decrease generation of oligomers with a low molecular weight during the manufacturing process of a siloxane resin, and thus decrease tackiness on the surface, improving workability.

The following examples illustrate the present invention in more detail. However, they are exemplary embodiments of the present invention and are not limiting.

### Synthesis of a first siloxane resin

### Synthesis Example 1

205.04g (1.1 mol) of 1,3-divinyl-1,1,3,3-tetramethyl disiloxane was added to 600g of toluene in a four-necked flask with an agitator, a temperature controller, a nitrogen gas-injecting device, and a cooler, while nitrogen was flowed therethrough and dissolved therein. Herein, a small amount of a PS-CS-1.8CS (Unicore) was added thereto and continuously stirred. Next, a solution prepared by dissolving 332g (1mol) of 3,3-diphenyl-1,1,5,5-tetramethyltrisiloxane in 600g of toluene was slowly dripped into the above solution for about 30 minutes. Then, the reaction solution was heated for reflux for 24 hours. The resulting reaction solution was passed through a 5cm-thick silica gel column to remove a platinum complex. Its solvent was removed under reduced pressure distillation, preparing a first linear siloxane resin with a number average molecular weight of 8000. In addition, when the first linear siloxane resin was analyzed using gel permeation chromatography (GPC), oligomers with a low molecular weight of less than 500 were not present.

### Synthesis Example 2

A siloxane resin was prepared according to the same method as in Synthesis Example 1, except for using 423.2g (1.1 mol) of 3,3-diphenyl-1,5-divinyl-1,1,5,5-tetramethyltrisiloxane instead of 1,3-divinyl-1,1,3,3-tetramethyl disiloxane. The siloxane resin had a number average molecular weight of 9700. In addition, it had no low molecular weight oligomers with a number average molecular weight of less than 500 as a gel permeation chromatography analysis result.

### Synthesis Example 3

A siloxane resin was prepared according to the same method as in Synthesis Example 1, except for using 442.41 g (1.15mol) of 3,3-diphenyl-1,5-divinyl-1,1,5,5-tetramethyltrisiloxane instead of 1,3-divinyl-1,1,3,3-tetramethyl disiloxane. The siloxane resin turned out to be a first linear siloxane resin A-2 with a number average molecular weight of 6700. As a gel permeation chromatography analysis result, low molecular weight oligomers with a number average molecular weight of less than 500 were not present.

### Preparation of a hybrid siloxane polymer

### Example 1

A hybrid siloxane polymer was prepared by mixing 2.56g of the first siloxane resin according to Synthesis Example 1, 5g of a second siloxane resin represented by the following Chemical Formula 2a, 1 g of 3,3-diphenyl-1,1,5,5-tetramethyltrisiloxane, and 3ppm of PS-CS-1.8CS (Unicore). following by completely dissolving them.

[Chemical Formula 2a] (Me₂ViSiO_{1/2})_{0.15}(PhSiO_{3/2})_{0.85}

In the hybrid siloxane polymer, a hydrogen/vinyl group (H/Vi) was included in a ratio of 1.1:1.

### Example 2

A hybrid siloxane polymer was prepared by mixing 1.11g of the first siloxane resin according to Synthesis Example 1, 5.3g of a second siloxane resin represented by Chemical Formula 2a, 1g of 3,3-diphenyl-1,1,5,5-tetramethyltrisiloxane, and 3ppm of PS-CS-1.8CS (Unicore).

In the hybrid siloxane polymer, a hydrogen/vinyl group (H/Vi) was included in a ratio of 1.1:1.

### Example 3

A hybrid siloxane polymer was prepared by mixing 3.11g of the first siloxane resin according to Synthesis Example 2, 5g of a second siloxane resin represented by Chemical Formula 2a, 1g of 3,3-diphenyl-1,1,5,5-tetramethyltrisiloxane , and 3ppm of PS-CS-1.8CS (Unicore).In the hybrid siloxane polymer, a hydrogen/vinyl group (H/Vi) was included in a ratio of 1.1:1.

### Example 4

A hybrid siloxane polymer was prepared by mixing 1.34g of the first siloxane resin according to Synthesis Example 2, 5.3g of a second siloxane resin represented by Chemical Formula 3a, 1g of 3,3-diphenyl-1,1,5,5-tetramethyltrisiloxane, and 3ppm of PS-CS-1.8CS (Unicore). In the hybrid siloxane polymer, a hydrogen/vinyl group (H/Vi) was included in a ratio of 1.1:1.

### Example 5

A hybrid siloxane polymer was prepared by mixing 2.14g of the first siloxane resin obtained in Synthesis Example 3, 5g of a second siloxane resin represented by Chemical Formula 2a, 1g of 3,3-diphenyl-1,1,5,5-tetramethyltrisiloxane, and 3ppm of PS-CS-1.8CS (Unicore).In the hybrid siloxane polymer, a hydrogen/vinyl group (hive) was included in a ratio of 1.1:1.

### Example 6

0.93g of the first siloxane resin obtained in Synthesis Example 3, 5.3g of the second siloxane resin represented by Chemical Formula 2a, 1g of 3,3-diphenyl-1,1,5,5-tetramethyltrisiloxane, and 3ppm of PS-CS-1.8CS (Unicore). In the hybrid siloxane polymer, a hydrogen/vinyl group (HNi) was included in a ratio of 1.1:1.

### Comparative Example

A hybrid siloxane polymer was prepared by mixing 1.60g of a siloxane resin represented by the following Chemical Formula 4, 5g of a second siloxane resin represented by Chemical Formula 2a, 1g of a curing agent and 3ppm PS-CS-1.8CS (Unicore).

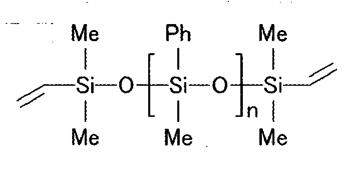

In Chemical Formula 5, Me is a methyl group and Ph is a phenyl group.

### Evaluation

The hybrid siloxane polymers according to Examples 1 to 6 and the comparative example were heated and cured in a 150°C oven for one hour and measured regarding initial transmittance at 450nm. In addition, the cured resin was measured regarding how long it took for the cured resin to pass through a column using a Tack meter. The time of passing through a column is a criterion for measuring tackiness. The shorter the time taken for a product to pass through a column, the less tackiness it has.

The cured resin was allowed to stand in a 150°C oven for 1000 hours and again measured regarding transmittance at 450nm. A smaller initial transmittance and transmittance difference after the heat treatment indicates excellent heat and light resistance.

The results are provided in Table 1.

In Table 1, the coefficient of thermal expansion (CTE) was measured with a thermomechanical analysis (TMA) method. The tackiness was measured using a tack tester.

**Table 1**

| | Refractive index | Column passing time (second) | Tackiness (gf) | CTE (µm/m°C) | Transmittance | | |
|---|---|---|---|---|---|---|---|
| | | | | | 0 hour | 1000hours | decrement |
| Example 1 | 1.53 | 22 | 12 | 115 | 99.3 | 92.4 | 6.9 |
| Example 2 | 1.54 | 30 | 15 | 130 | 99.7 | 92.5 | 7.2 |
| Example 3 | 1.54 | 26 | 14 | 128 | 99.9 | 91.5 | 8.4 |
| Example 4 | 1.54 | 34 | 16 | 141 | 99.5 | 91.2 | 8.3 |
| Example 5 | 1.54 | 24 | 13 | 120 | 99.6 | 92.5 | 7.1 |
| Example 6 | 1.54 | 30 | 16 | 134 | 99.4 | 93.2 | 6.2 |
| Comparative Example | 1.53 | 86 | 32 | 156 | 99.5 | 89.6 | 9.9 |

As shown in Table 1, the hybrid siloxane polymers according to Examples 1 to 6 showed similar refractive indexes but low coefficients of thermal expansion and low tackiness as well as a small transmittance decrement after the heat treatment compared with the hybrid siloxane polymer of the comparative example. The hybrid siloxane polymers according to Examples 1 to 6 showed good refractive indexes and excellent heat and light resistances, but simultaneously low coefficients of thermal expansion and tackiness.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A hybrid siloxane polymer comprising
a linear first siloxane resin comprising moieties represented by the following Chemical Formulas 1 a and 1b and double bonds at both terminal ends,
a curing agent having more than two silicon-hydrogen bonds, and
a second siloxane resin having a reticular structure and comprising at least one alkenyl group: 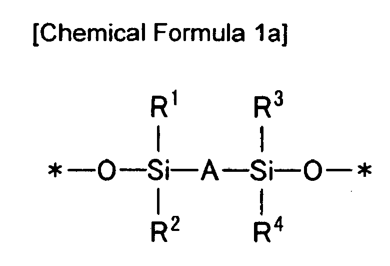 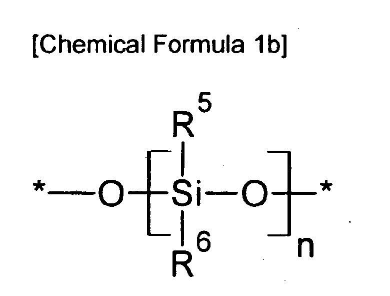 wherein, in Chemical Formula 1a or 1b, A is a C2 to C10 alkylene group, R¹ to R⁶ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, and n ranges from 1 to 500.

2. The hybrid siloxane polymer of claim 1, wherein the second siloxane resin is represented by the following Chemical Formula 2:
[Chemical Formula 2] [R⁷SiO_{3/2}]_{T}[R⁸R⁹SiO]_{D} [R¹⁰R¹¹R¹²SiO_{1/2}]_{M}
wherein, in Chemical Formula 2, R⁷ to R¹² are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof, provided that at least one of R¹⁰, R¹¹, and R¹² is an alkenyl group, T>0, D≥0, M>0, and T+D+M=1.

3. The hybrid siloxane polymer of claim 1 or 2, wherein at least 15% of R⁷ to R¹² in Chemical Formula 2 comprises an aryl group.

4. The hybrid siloxane polymer of claims 1 to 3, wherein at least 30% of R⁵ and R⁶ in Chemical Formula 1b comprises an aryl group.

5. The hybrid siloxane polymer of claims 1 to 4, wherein the first siloxane resin further comprises a moiety represented by the following Chemical Formula 1c: 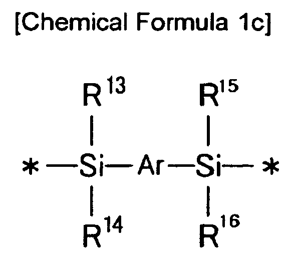 wherein, in Chemical Formula 1c, Ar is a substituted or unsubstituted C6 to C20 aryl group, R¹³ to R¹⁶ are independently a substituted or unsubstituted C1 to C10 alkyl group, a substituted or unsubstituted C3 to C20 cycloalkyl group, a substituted or unsubstituted C6 to C20 aryl group, a substituted or unsubstituted C7 to C20 arylalkyl group, a substituted or unsubstituted C1 to C20 heteroalkyl group, a substituted or unsubstituted C2 to C20 heterocycloalkyl group, a substituted or unsubstituted C2 to C20 alkenyl group, a substituted or unsubstituted C2 to C20 alkynyl group, a substituted or unsubstituted C1 to C10 alkoxy group, a halogen, or a combination thereof.

6. The hybrid siloxane polymer of claims 1 to 5, wherein A of the first siloxane resin is selected from an ethylene group, a propylene group, a butylene group, and a pentylene group.

7. The hybrid siloxane polymer of claims 1 to 6, wherein the first siloxane resin has a number average molecular weight of about 500 to about 20,000.

8. The hybrid siloxane polymer of claims 1 to 7, wherein the first siloxane resin and the second siloxane resin are included in an amount of about 5 to about 50 wt% and about 15 to about 80 wt%, respectively, based on the total amount of the hybrid siloxane polymer.

9. The hybrid siloxane polymer of claims 1 to 8, which further comprises a curing agent having at least two silicon-hydrogen bonds.

10. The hybrid siloxane polymer of claims 1 to 9, which further comprises a hydrosilation catalyst.

11. An encapsulant obtained by curing the hybrid siloxane polymer of claims 1 to 10.

12. An electronic device comprising the encapsulant of claim 11.

13. The electronic device of claim 12, wherein the electronic device comprises a light emitting diode, an organic light emitting device, photoluminescent device, or a solar cell.

## Patentansprüche

1. Hybrid-Siloxanpolymer, umfassend
ein lineares erstes Siloxanharz, umfassend Einheiten der folgenden Chemischen Formeln 1a und 1b und Doppelbindungen an beiden terminalen Enden, ein Härtungsmittel mit mehr als zwei Silicium-Wasserstoff-Bindungen und
ein zweites Siloxanharz mit einer retikulierten Struktur und mindestens einer Alkenylgruppe: 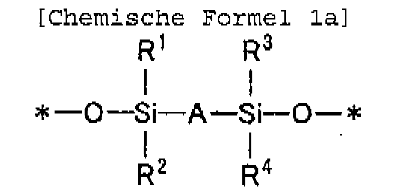 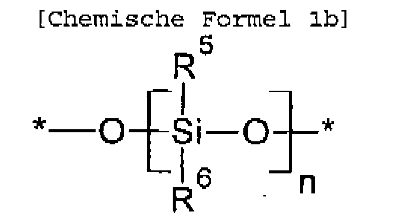 wobei in der Chemischen Formel la oder 1b A für eine C2- bis C10-Alkylengruppe steht, R¹ bis R⁶ unabhängig für eine substituierte oder unsubstituierte C1- bis C10-Alkylgruppe, eine substituierte oder unsubstituierte C3- bis C20-Cycloalkylgruppe, eine substituierte oder unsubstituierte C6- bis C20-Arylgruppe, eine substituierte oder unsubstituierte C7- bis C20-Arylalkylgruppe, eine sunsulzulerze oder unsubstituierte C1- bis C20-Heteroalkylgruppe, eine substituierte oder unsubstituierte C2- bis C20-Heterocycloalkyl-gruppe, eine substituierte oder unsubstituierte C2- bis C20-Alkenylgruppe, eine substituierte oder unsubstituierte C2- bis C20-Alkinylgruppe, eine substituierte oder unsubstituierte C1- bis C10-Alkoxygruppe, ein Halogen oder eine Kombination davon stehen und n im Bereich von 1 bis 500 liegt.

2. Hybrid-Siloxanpolymer nach Anspruch 1, wobei das zweite Siloxanharz durch die folgende Chemische Formel 2 wiedergegeben wird:
[Chemische Formel 2] [R⁷SiO_{3/2}]_{T}[R⁸R⁹SiO]_{D}[R¹⁰R¹¹R¹²SiO_{1/2}]_{M}
wobei in der Chemischen Formel 2 R⁷ bis R¹² unabhängig für eine substituierte oder unsubstituierte C1- bis C10-Alkylgruppe, eine substituierte oder unsubstituierte C3- bis C20-Cycloalkylgruppe, eine substituierte oder unsubstituierte C6- bis C20-Arylgruppe, eine substituierte oder unsubstituierte C7- bis C20-Arylalkylgruppe, eine substituierte oder unsubstituierte C1- bis C20-Heteroalkylgruppe, eine substituierte oder unsubstituierte C2- bis C20-Heterocycloalkyl-gruppe, eine substituierte oder unsubstituierte C2- bis C20-Alkenylgruppe, eine substituierte oder unsubstituierte C2- bis C20-Alkinylgruppe, eine substituierte oder unsubstituierte C1- bis C10-Alkoxygruppe, ein Halogen oder eine Kombination davon stehen, mit der Maßgabe, dass mindestens einer der Reste R¹⁰, R¹¹ und R¹² eine Alkenylgruppe ist, T>0, D≥0, M>0 und T+D+M=1.

3. Hybrid-Siloxanpolymer nach Anspruch 1 oder 2, wobei mindestens 15% von R⁷ bis R¹² in der Chemischen Formel 2 eine Arylgruppe umfassen.

4. Hybrid-Siloxanpolymer nach den Ansprüchen 1 bis 3, wobei mindestens 30% vom R⁵ und R⁶ in der Chemischen Formel 1b eine Arylgruppe umfassen.

5. Hybrid-Siloxanpolymer nach den Ansprüchen 1 bis 4, wobei das erste Siloxanharz ferner eine Gruppierung der folgenden Chemischen Formel 1c umfasst: 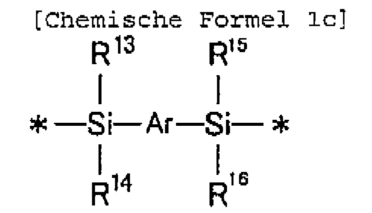 wobei in der Chemischen Formel 1c Ar für eine substituierte oder unsubstituierte C6- bis C20-Arylgruppe steht und R¹³ bis R¹⁶ unabhängig für eine substituierte oder unsubstituierte C1- bis C10-Alkylgruppe, eine substituierte oder unsubstituierte C3- bis C20-Cycloalkylgruppe, eine substituierte oder unsubstituierte C6- bis C20-Arylgruppe, eine substituierte oder unsnbstituierte C7- bis C20-Arylalkylgruppe, eine substituierte oder unsubstituierte C1- bis C20-Hetero-alkylgruppe, eine substituierte oder unsubstituierte C2- bis C20-Heterocycloalkylgruppe, eine substituierte oder unsubstituierte C2- bis C20-Alkenylgruppe, eine substituierte oder unsubstituierte C2- bis C20-Alkinylgruppe, eine substituierte oder unsubstituierte C1- bis C10-Alkoxygruppe, ein Halogen oder eine Kombination davon stehen.

6. Hybrid-Siloxanpolymer nach den Ansprüchen 1 bis 5, wobei A des ersten Siloxanharzes aus einer Ethylengruppe, einer Propylengruppe, einer Eutylengrupps und einer Pentylengruppe ausgewählt ist.

7. Hybrid-Siloxanpolymer nach den Ansprüchen 1 bis 6, wobei das erste Siloxanharz ein zahlenmittleres Molekulargewicht von etwa 500 bis etwa 20.000 aufweist.

8. Hybrid-Siloxanpolymer nach den Ansprüchen 1 bis 7, wobei das erste Siloxanharz und das zweite Siloxanharz in einer Menge von etwa 5 bis etwa 50 Gew.-% bzw. etwa 15 bis etwa 80 Gew.-%, bezogen auf die Gesamtmenge des Hylorid-Siloxanpolymers, enthalten sind

9. Hybrid-Siloxanpolymer nach den Ansprüchen 1 bis 8, das ferner ein Härtungsmittel mit mindestens zwei Silicium-Wasserstoff-Bindungen umfasst.

10. Hybrid-Siloxanpolymer nach den Ansprüchen 1 bis 9, das ferner einen Hydrosilylierungskatalysator umfasst.

11. Verkapselungsmittel, erhalten durch Härten des Hybrid-Siloxanpolymers gemäß den Ansprüchen 1 bis 10.

12. Elektronische Vorrichtung, umfassend das Verkapselungsmittel gemäß Anspruch 11.

13. Elektronische Vorrichtung nach Anspruch 12, wobei die elektronische Vorrichtung eine lichtemittierende Diode, eine organische lichtemittierende Vorrichtung, eine Photolumineszenzvorrichtung oder eine Solarzelle umfasst.

## Revendications

1. Polymère siloxane hybride comprenant :
une première résine siloxane linéaire comprenant des fractions représentées par les Formules chimiques 1a et 1b ci-dessous et des doubles liaisons aux deux extrémités terminales,
un agent de durcissement comportant plus de deux liaisons silicium-hydrogène, et
une deuxième résine siloxane ayant une structure réticulaire et comprenant au moins un groupe alcényle ; 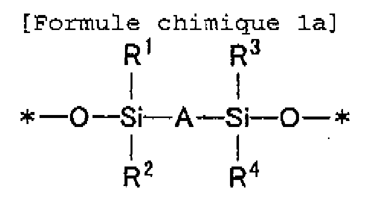 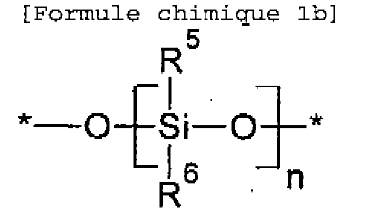
dans la Formule chimique la ou 1b, A étant un groupe alkylène C₂-C₁₀, les groupes R¹ à R⁵ étant indépendamment un groupe alkyle C₁-C₁₀ substitué ou non substitué, un groupe cycloalkyle C₃-C₂₀ substitué ou non substitué, un groupe aryle C₆-C₂₀ substitué ou non substitué, un groupe arylalkyle C₇-C₂₀ substitué ou non substitué, un groupe hétéroalkyle C₁-C₂₀ substitué ou non substitué, un groupe hétérocycloalkyle C₂-C₂₀ substitué ou non substitué, un groupe alcényle C₂-C₂₀ substitué ou non substitué, un groupe alkynyle C₂-C₂₀ substitué ou non substitué, un groupe alcoxy C₁-C₁₀ substitué ou non substitué, un atome d'halogène, ou une combinaison de ceux-ci, et n valant de 1 à 500.

2. Polymère siloxane hybride selon la revendication 1, dans lequel la deuxième résine siloxane est représentée par la formule chimique 2 ci-dessus
[formule chimique 2] [R⁷SiO_{3/2}]_{T} [R⁸R⁹SiO]_{D}[R¹⁰R¹¹R¹²SiO_{1/2}]_{M},
dans la formule chimique 2, les groupes R⁷ à R¹² étant indépendamment un groupe alkyle C₁-C₁₀ substitué ou non substitué, un groupe cycloalkyl C₃-C₂₀ substitué ou non substitué, un groupe aryle C₆-C₂₀ substitué ou non substitué, un groupe arylalkyle C₇-C₂₀ substitué ou non substitué, 1 un groupe hétéroalkyle C₁-C₂₀ substitué ou non substitué, un groupe hétérocycloalkyle C₂-C₂₀ substitué ou non substitué, un groupe alcényle C₂-C₂₀ substitué ou non substitué, un groupe alkynyle C₂-C₂₀ substitué ou non substitué, un groupe alcoxy C₁-C₁₀ substitué ou non substitué, un atome d'halogène, ou une combinaison de ceux-ci, sous réserve qu'au moins un de R¹⁰, R¹¹ et R¹² soit un groupe alcényle, T>0, D>0, M>0, et T+D+M = 1.

3. Polymère siloxane hybride selon la revendication 1 ou 2, dans lequel une proportion d'au moins 15 % des groupes R⁷ à R¹² dans la formule chimique 2 comprend un groupe aryle.

4. Polymère siloxane hybride selon les revendications 1 à 3, dans lequel une proportion d'au moins 30 % des groupes R⁵ et R⁶ dans la formule chimique 1b comprend un groupe aryle.

5. Polymère siloxane hybride selon les revendications 1 à 4, dans lequel la première résine siloxane comprend en outre une fraction représentée par la formule chimique 1c ci-dessous : 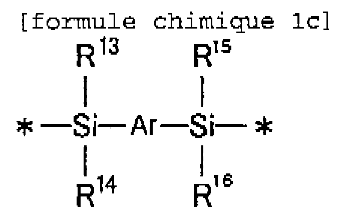 dans la formule chimique 1c, Ar étant un groupe aryle C₆-C₂₀ substitué ou non substitut, les groupes R¹³ à R¹⁶ étant indépendamment un groupe alkyle C₁-C₁₀ substitué ou non substitué, un groupe cycloalkyle C₃-C₂₀ substitué ou non substitué, un groupe aryle C₆-C₂₀ substitué ou non substitué, un groupe arylalkyle C₇-C₂₀ substitué ou non substitué, un groupe hétéroalkyle C₁-C₂₀ substitué ou non substitué, un groupe hétérocycloalkyle C₂-C₂₀ substitué ou non substitué, un groupe alcényle C₂-C₂₀ substitué ou non substitué, un groupe alkynyle C₂-C₂₀ substitué ou non substitué, un groupe alcoxy C₁-C₁₀ substitué ou non substitué, un atome d'halogène, ou une combinaison de ceux-ci.

6. Polymère siloxane hybride selon les revendications 1 à 5, dans lequel le groupe A de la première résine siloxane est sélectionné parmi un groupe éthylène, un groupe propylène, un groupe butylène, et un groupe pentylène.

7. Polymère siloxane hybride selon les revendications 1 à 6, dans lequel la première résine siloxane a une masse moléculaire moyenne en nombre d'environ 500 à environ 20 000.

8. Polymère siloxane hybride selon les revendications 1 à 7, dans lequel la première résine siloxane et la deuxième résine siloxane sont incluses dans une quantité d'environ 5 % à environ 50 % en poids et d'environ 15 % à environ 80 % en poids, respectivement, relativement à la quantité totale du polymère siloxane hybride.

9. Polymère siloxane hybride selon les revendications 1 à 8, lequel comprend en outre un agent de durcissement comportant au moins deux liaisons silicium-hydrogène.

10. Polymère siloxane hybride selon les revendications 1 à 9, lequel comprend en outre un catalyseur d'hydrosilation.

11. Encapsulant obtenu par durcissement du polymère siloxane hybride selon les revendications 1 à 10.

12. Dispositif électronique comprenant l'encapsulant selon la revendication 11.

13. Dispositif électronique selon la revendication 12, le dispositif électronique comprenant une diode photoémettrice, un dispositif photo-émetteur organique, un dispositif photoluminescent, ou une cellule solaire.
